# EUROPEAN PATENT APPLICATION

(11) **EP 4 791 014 A1**
(43) Date of publication of application: **12.08.2026**
(21) Application number: 24874848.5
(22) Date of filing: 14.08.2024
(51) Int. Cl.: H04N 23/50, G03B 17/02

(54) **CAMERA WINDOW SEPARATION DEVICE AND SEPARATION METHOD FOR SELF-REPAIRING**

(30) Priority: 06.10.2023 KR 20230133822; 25.10.2023 KR 20230143851
(71) Applicant: SAMSUNG ELECTRONICS CO., LTD., Yeongtong-gu Suwon-si, Gyeonggi-do 16677 (KR)
(72) Inventor: LEE, Dongjin, Suwon-si Gyeonggi-do 16677 (KR); HONG, Sunghyun, Suwon-si Gyeonggi-do 16677 (KR); HWANG, Jangsoo, Suwon-si Gyeonggi-do 16677 (KR); CHOI, Hyunsuk, Suwon-si Gyeonggi-do 16677 (KR)
(74) Representative: Gulde & Partner
(86) International application number: PCT/KR2024/012128
(87) International publication number: WO 2025/075289

(57) **Abstract**

The separation device includes: a guide member including a first opening for at least partially surrounding a part of a camera decoration and a second opening substantially aligned with a camera window attached on the camera decoration; an attachment tape for attaching the guide member to the camera window; a coupling member attached to the camera window; and an injection member for accommodating an attachment solution for attaching the coupling member to the camera window, and injecting the attachment solution onto the camera window. Other various embodiments may be possible.

## Description

### [Technical Field]

The present disclosure relates to a camera window separation device and a separation method for self-repairing.

### [Background Art]

An electronic device may include at least one camera for capturing an image. The electronic device may include a camera deco and a camera window for protecting the camera. For example, the camera window may be attached onto the camera deco. The camera deco may be coupled to a housing (e.g., a rear plate) of the electronic device. In order for a user to replace the camera window, separation of the camera window from the camera deco may be required.

The above-described information may be provided as related art for the purpose of helping the understanding of the present disclosure. No claim or determination is raised as to whether any of the above-described content may be applied as prior art related to the present disclosure.

### [Disclosure]

### [Technical Solution]

A separation device is provided. The separation device may comprise a guide member including a first opening for at least partially surrounding a portion of a camera deco exposed to an outside of an electronic device, and a second opening substantially aligned with a camera window attached onto the camera deco. The separation device may comprise an adhesive tape for attaching the guide member to the camera window. The separation device may comprise a coupling member having a shape corresponding to a shape of the second opening to be inserted into the second opening, and attached to the camera window by being inserted into the second opening. The separation device may comprise an injection member for receiving an attachment solution for attaching the coupling member to the camera window, and for injecting the attachment solution onto the camera window.

A method of separating a camera window using a separation device is provided. The method may comprise attaching a guide member to the camera window by inserting a portion of a camera deco exposed to an outside of an electronic device into a first opening of the guide member. The method may comprise injecting an attachment solution received in an injection member onto the camera window substantially aligned with a second opening of the guide member. The method may comprise contacting the coupling member with the camera window by inserting the coupling member into the second opening. The method may comprise separating the camera window from the camera deco by providing an external force to the coupling member.

### [Description of the Drawings]

FIG. 1A and FIG. 1B are exploded views of an exemplary electronic device.
FIG. 2 illustrates a separation device according to an embodiment.
FIG. 3A illustrates a process in which a guide of a separation device and a camera deco are coupled, according to an embodiment.
FIG. 3B illustrates a state in which the camera deco is inserted into the guide of the separation device according to an embodiment.
FIG. 3C is a rear perspective view of a guide member of the separation device according to an embodiment.
FIG. 4 is a cross-sectional view of a guide member of a separation device cut along line A-A' of FIG. 3B, according to an embodiment.
FIG. 5A illustrates a state in which a portion of an injection member of a separation device is inserted into a third opening, according to an embodiment.
FIG. 5B illustrates a process in which the injection member of the separation device injects an attachment solution, according to an embodiment.
FIG. 6A illustrates a state before a coupling member of a separation device is inserted into a second opening, according to an embodiment.
FIG. 6B illustrates a state in which the coupling member of the separation device is inserted into the second opening, according to an embodiment.
FIG. 6C is a cross-sectional view of the separation device cut along line B-B' of FIG. 6B, according to an embodiment.
FIG. 7A illustrates a state in which a separation device is disassembled, according to an embodiment.
FIG. 7B is an enlarged view of region C of FIG. 7A.
FIG. 8 is a flow chart illustrating a process of separating a camera window using a separation device according to an embodiment.

### [Mode for Invention]

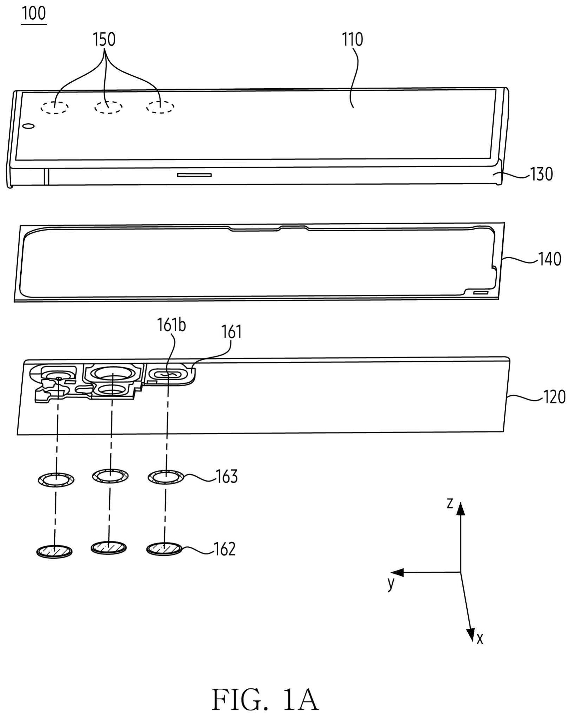

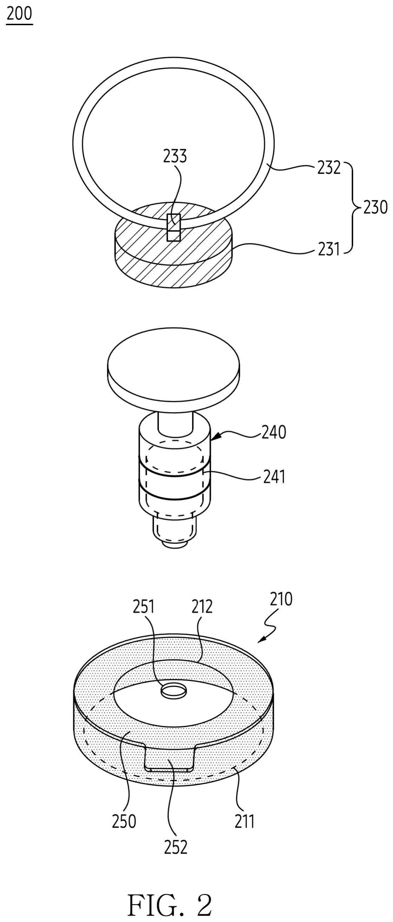

In the present disclosure, relative terms such as up, down, front, and rear may be used to describe relative positions between components. For example, when an electronic device (e.g., an electronic device 100 of FIG. 1A) or a separation device (e.g., a separation device 200 of FIG. 2) illustrated in the drawings is turned over, up and down may be interchanged. For example, when the electronic device 100 or the separation device 200 illustrated in the drawings is turned over, front and rear may be interchanged.

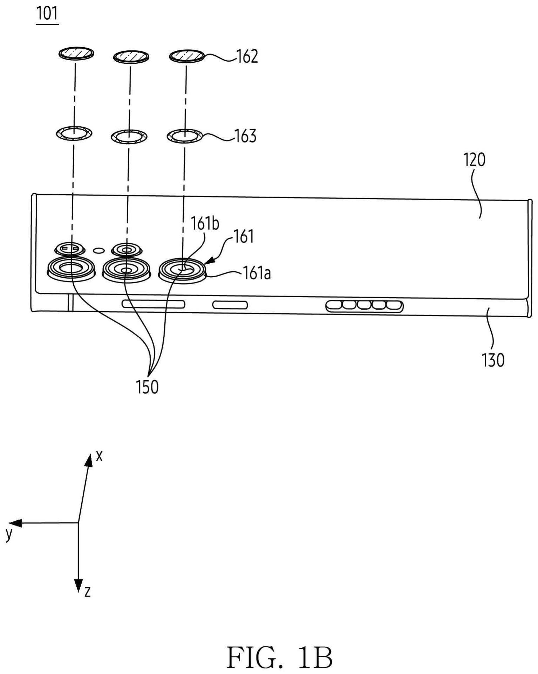

FIG. 1A and FIG. 1B are exploded views of an exemplary electronic device.

Referring to FIG. 1A and FIG. 1B, an exemplary electronic device 100 may include a camera 150. For example, the camera 150 may be disposed to face a rear direction (e.g., a -z direction) of the electronic device 100. For example, the camera 150 may be plural.

The exemplary electronic device 100 may include a display 110, a side frame 130, and a rear plate 120. For example, the display 110 may be disposed to face a front side (e.g., a +z direction) of the electronic device 100. For example, the rear plate 120 may be disposed to face a rear side (e.g., the -z direction) of the electronic device 100.

A plurality of components of the electronic device 100 may be disposed in an internal space between the display 110 and the rear plate 120. For example, the camera 150 may be disposed in the space between the display 110 and the rear plate 120. For example, the camera 150 may be disposed to face the rear plate 120.

For example, the side frame 130 may be coupled to the rear plate 120. For example, the electronic device 100 may include an adhesive tape 140 interposed between the side frame 130 and the rear plate 120. The adhesive tape 140 may reduce inflow of foreign substances (e.g., moisture or dust) into the electronic device 100 by firmly attaching the rear plate 120 and the side frame 130.

The exemplary electronic device 100 may include a camera deco 161. The camera deco 161 may protect the camera 150 by covering the camera 150. For example, the camera deco 161 may include metal (e.g., aluminum) to have rigidity. In terms of protecting the camera 150, the camera deco 161 may also be referred to as a deco member, a camera island, an isolator, a camera cover, a decorative member, a protective member, and/or a camera frame structure.

The camera 150 may include a lens for obtaining light emitted from a subject. The camera deco 161 may include an opening 161b substantially aligned with the lens of the camera 150 so that light may be provided to the lens. Light emitted from the subject may be incident on the lens of the camera 150 through the opening 161b. Since the lens of the camera 150 is exposed to the outside through the opening 161b of the camera deco 161, a camera window 162 for shielding the opening 161b may be disposed on the camera deco 161. For example, the camera window 162 may be substantially transparent to transmit light.

The camera window 162 may be attached onto the camera deco 161 by an adhesive tape 163 for the camera window 162. For example, the camera window 162 may be disposed on a portion 161a of the camera deco 161 exposed to an outside of the rear plate 120. For example, the portion 161a of the camera deco 161 may pass through the rear plate 120 and protrude in a direction (e.g., the -z direction) toward which the rear plate 120 faces. The adhesive tape 163 for the camera window 162 may be interposed between the camera deco 161 and the camera window 162. For example, the adhesive tape 163 for the camera window 162 may be double-sided tape. When the electronic device 100 is viewed from the rear side toward the front side (e.g., in the +z direction), the camera window 162, the adhesive tape 163 for the camera window 162, and the camera deco 161 may be sequentially disposed.

For example, a size and a shape of the camera window 162 may correspond to a size and a shape of the camera deco 161. Since the camera window 162 is exposed to an outside of the electronic device 100, the camera window 162 may be damaged. When the camera window 162 is damaged or a crack occurs in the camera window 162, replacement of the camera window 162 may be required. Replacement of the camera window 162 may be performed by separating the damaged camera window 162 from the camera deco 161 and then attaching a new camera window 162 onto the camera deco 161. Since the camera window 162 is attached onto the camera deco 161 by the adhesive tape 163 for the camera window 162, an external force greater than adhesive force by the adhesive tape 163 for the camera window 162 may be required to separate the camera window 162.

A direction (e.g., the -z direction) in which the camera window 162 is separated from the camera deco 161 may be opposite to a direction in which the camera window 162, the adhesive tape 163 for the camera window 162, and the camera deco 161 are disposed. As the external force is applied in a direction (e.g., the -z direction) toward which the rear side of the electronic device 100 faces, the camera window 162 may be separated from the camera deco 161. Since the rear plate 120 is coupled to a support member, separation of the rear plate 120 and the side frame 130 may be required to apply the external force in the direction (e.g., the -z direction). After separating the rear plate 120 and the side frame 130, the camera window 162 exposed through the opening 161b of the camera deco 161 may be separated from the camera deco 161 by being pressed in the direction (e.g., the -z direction).

The side frame 130 and the rear plate 120 may be strongly coupled to protect components disposed inside the electronic device 100. For example, to separate the rear plate 120 and the side frame 130, a process of aging at a high temperature for a certain time (e.g., approximately 20 minutes) and separating the rear plate 120 from the side frame 130 using a suction device that adsorbs the rear plate 120 may be required. After separating the rear plate 120 from the side frame 130, a portion of the camera window 162 exposed through the opening 161b of the camera deco 161 may be pressed in the direction (e.g., the -z direction), thereby separating the camera window 162 from the camera deco 161. After replacing the camera window 162, a process of coupling the side frame 130 and the rear plate 120 again may be required. Since the process requires separation of the side frame 130 and the rear plate 120, a relatively long time may be required and a complicated process may be required. Since use of a suction device for adsorbing the rear plate 120 is required, it may be difficult to separate the camera window 162 without a separate suction device.

A separation device (e.g., a separation device 200 of FIG. 2) according to an embodiment may separate the camera window 162 from the camera deco 161 without separation of the side frame 130 and the rear plate 120. In the present disclosure, the separation device may be referred to as a device used to separate the camera window 162 from the camera deco 161. Since the separation device 200 according to an embodiment does not require separation of the side frame 130 and the rear plate 120, a separation process may be simple and a separate suction device may not be required. Hereinafter, with reference to the drawings, the separation device 200 for separating the camera window 162 from the camera deco 161 will be described.

FIG. 2 illustrates a separation device according to an embodiment.

Referring to FIG. 2, a separation device 200 according to an embodiment may include a guide member 210, an adhesive tape 220, a coupling member 230, and an injection member 240. The exemplary separation device 200 may separate a camera window (e.g., the camera window 162 of FIG. 1A) from a camera deco (e.g., the camera deco 161 of FIG. 1A).

For example, the guide member 210 may be used to guide a position of the coupling member 230 so that the coupling member 230 for separating the camera window 162 is substantially aligned with the camera window 162. The guide member 210 may at least partially surround a portion (e.g., the portion 161a of FIG. 1B) of the camera deco 161 exposed to an outside of the electronic device 100. For example, a user may dispose the guide member 210 on an outside of the camera deco 161 so as to at least partially surround the portion 161a of the camera deco 161 exposed to the outside of the electronic device 100. For example, the guide member 210 may include a first opening 211 for receiving the portion 161a of the camera deco 161 exposed to the outside of the electronic device 100. The first opening 211 may be positioned on a side (e.g., a side in a -z direction) of the guide member 210. As the portion of the camera deco 161 is inserted into the first opening 211, the guide member 210 may at least partially surround the camera deco 161. For example, a shape of the first opening 211 may substantially correspond to a shape of the camera deco 161 so that the first opening 211 at least partially surrounds the camera deco 161.

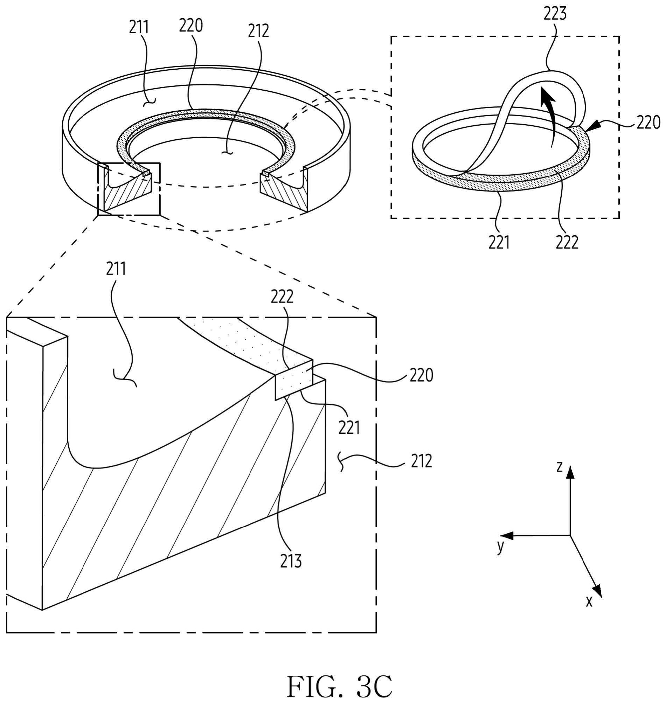

For example, an adhesive tape (e.g., an adhesive tape 220 of FIG. 3C) may be used to attach the guide member 210 to the camera window 162. Although not illustrated in FIG. 2, the adhesive tape 220 may be attached to an inner surface of the guide member 210. When the guide member 210 is disposed to at least partially surround the camera deco 161, an adhesive member may attach the guide member 210 to the camera window 162 by being attached to the camera window 162. For example, the adhesive tape 220 may be double-sided tape. The adhesive tape 220 will be described later with reference to FIG. 3C.

For example, the coupling member 230 may be attached to the camera window 162 and may be used to transmit an external force for separating the camera window 162 to the camera window 162. For example, the guide member 210 may include a second opening 212 into which the coupling member 230 may be inserted. The second opening 212 may be positioned on another side (e.g., a side in a +z direction) of the guide member 210 opposite to the side on which the first opening 211 is positioned. The coupling member 230 may be attached to the camera window 162 through the second opening 212.

For example, the coupling member 230 may be attached to the camera window 162 by being inserted into the second opening 212. For example, the second opening 212 may be substantially aligned with the camera window 162 so that the coupling member 230 may be substantially aligned with the camera window 162. In a state in which the coupling member 230 is attached to the camera window 162, an external force for separating the camera window 162 from the camera deco 161 may be applied to the coupling member 230. The camera window 162 may be separated from the camera deco 161 by the external force. For example, the coupling member 230 may include a body 231 and a knob 232. The body 231 may be a portion of the coupling member 230 inserted into the second opening 212. In a state in which the body 231 is inserted into the second opening 212, the knob 232 may be exposed to an outside of the second opening 212. For example, the knob 232 may be coupled to a protrusion 233 of the body 231. A user may apply an external force to the coupling member 230 by pulling the knob 232.

For example, the injection member 240 may be used to provide an attachment solution 241 for attaching the coupling member 230 to the camera window 162. The attachment solution 241 may be a liquid and/or a semi-solid (or quasi-solid) (e.g., a gel) material having adhesive strength. The attachment solution 241 may be received inside the injection member 240. The injection member 240 may be configured to inject the attachment solution 241. A user may inject the attachment solution 241 received in the injection member 240 onto the camera window 162 exposed through the second opening 212. When the coupling member 230 contacts the camera window 162 in a state in which the attachment solution 241 is injected onto the camera window 162, the coupling member 230 may be attached to the camera window 162.

The separation device 200 according to an embodiment may be used to separate the camera window 162 attached to the camera deco 161. Hereinafter, a process of separating the camera window 162 using the exemplary separation device 200 will be described.

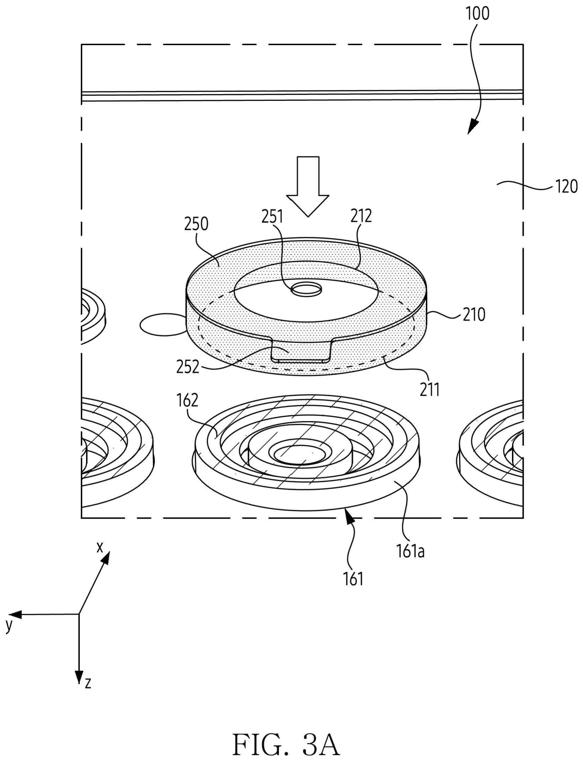

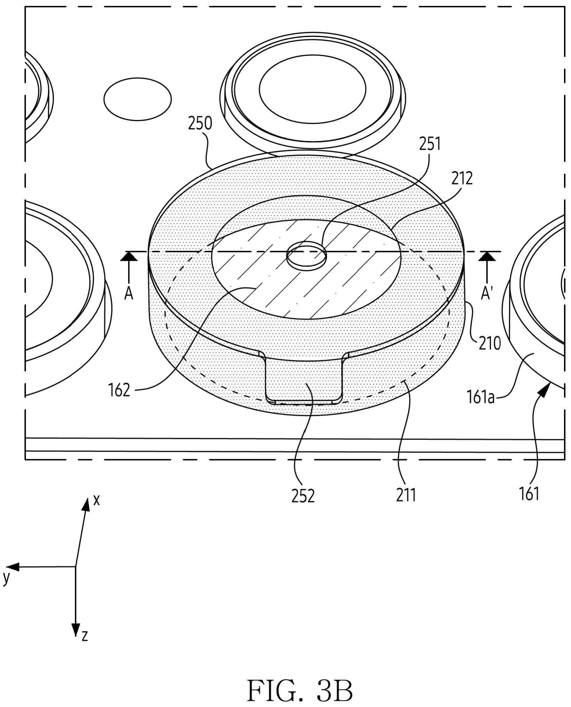

FIG. 3A illustrates a process in which a guide of a separation device and a camera deco are coupled, according to an embodiment. FIG. 3B illustrates a state in which the camera deco is inserted into the guide of the separation device according to an embodiment. FIG. 3C is a rear perspective view of a guide member of the separation device according to an embodiment.

Referring to FIG. 3A, a portion 161a of a camera deco 161 may be exposed to an outside of an electronic device 100. The portion 161a of the camera deco 161 may pass through a rear plate 120 and be exposed to the outside of the electronic device 100. A camera 150 may obtain light emitted from a subject through an opening 161b of the camera deco 161. A camera window 162 may protect the camera 150 by covering the opening 161b of the camera deco 161.

For example, a guide member 210 may include a first opening 211 for at least partially surrounding the portion 161a of the camera deco 161 exposed to the outside of the electronic device 100. A shape of the first opening 211 may substantially correspond to a shape of the portion 161a of the camera deco 161 so that the portion 161a of the camera deco 161 may be inserted into the first opening 211. For example, when the portion 161a of the camera deco 161 has a cylindrical shape, the shape of the first opening 211 may also be a cylindrical shape. A size of the first opening 211 may be greater than a size of the portion 161a of the camera deco 161 so that the portion 161a of the camera deco 161 may be inserted into the first opening 211. For example, as the guide member 210 is disposed to surround the portion 161a of the camera deco 161, the camera deco 161 may not be visible from the outside of the electronic device 101.

For example, the guide member 210 may approach the camera deco 161 in a direction from above to below the camera deco 161 (e.g., a +z direction) so that the portion 161a of the camera deco 161 may be inserted into the first opening 211. A user may insert the portion 161a of the camera deco 161 into the first opening 211 of the guide member 210. The portion 161a of the camera deco 161 may be inserted into the first opening 211.

Referring to FIG. 3B, when the portion 161a of the camera deco 161 is inserted into the first opening 211 of the guide member 210, the camera deco 161 may be at least partially surrounded by the guide member 210. For example, the guide member 210 may include a second opening 212. The second opening 212 may provide a space in which a coupling member 230 to be described later is inserted so that the coupling member 230 and the camera window 162 may be attached.

For example (162), substantially, in a state in which the camera deco 161 is inserted into the first opening 211, the second opening 212 may be substantially aligned with the camera window 162. The second opening 212 being substantially aligned with the camera window 162 may be referred to as a center of the second opening 212 and a center of the camera window 162 being substantially aligned. Since the connecting member is attached to the camera window 162 by contacting the camera window 162 through the second opening 212, the second opening 212 may be aligned with the camera window so that the connecting member may be attached in a state substantially aligned with the camera window 162.

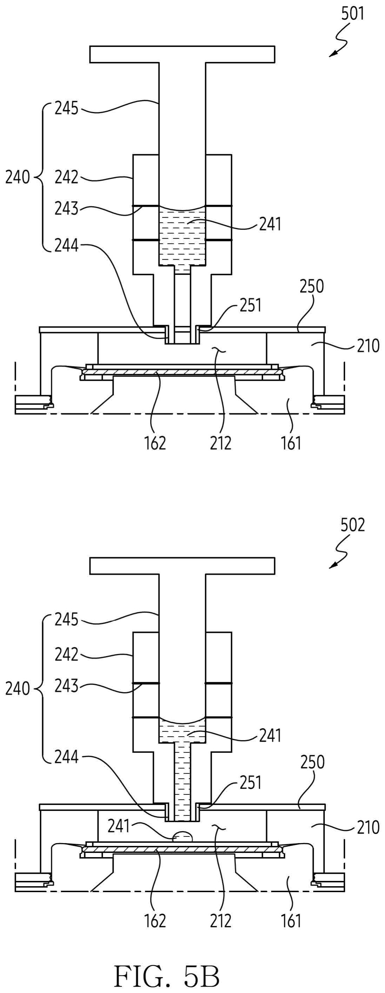

For example, the guide member 210 may further include a cover 250. For example, the cover 250 may be attached on a surface of the guide member 210 in a direction toward which the rear plate 120 faces (e.g., a -z direction) to cover the second opening 212. For example, the cover 250 may include a third opening 251 into which a portion (e.g., a tip 244 of FIG. 5B) of an injection member (e.g., an injection member 240 of FIG. 5B) is inserted. A portion of the injection member 240, while being inserted into the third opening 251, may inject an attachment solution (e.g., an attachment solution 241 of FIG. 5B) received therein onto the camera window 162. For example, the cover 250 may be substantially transparent so that whether the attachment solution 241 is properly injected onto the camera window 162 may be visible. For example, the third opening 251 may be substantially aligned with the camera window 162 so that the attachment solution 241 may be injected toward a center of the camera window 162. The third opening 251 being substantially aligned with the camera window 162 may be referred to as the third opening 251 being substantially aligned with the center of the camera window 162.

For example, in a state in which the portion 161a of the camera deco 161 is inserted into the first opening 211 of the guide member 210, the portion 161a of the camera deco 161 may be substantially covered. In the state, the guide member 210 may be attached to the camera window 162. For example, an adhesive tape 220 may attach the guide member 210 to the camera window 162. The guide member 210 may be fixed in a state in which the portion 161a of the camera deco 161 is received in the first opening 211 by being attached to the camera window 162 by the adhesive tape 220.

Referring to FIG. 3C, an adhesive tape 220 may be attached to an inner surface of a guide member 210. For example, the adhesive tape 220 may be double-sided tape. For example, a side 221 of the adhesive tape 220 may be attached to the guide member 210. The side 221 may be a side facing a second opening 212 (e.g., facing a +z direction). For example, the adhesive tape 220 may include a peelable release paper 223 attached on another side 222 of the adhesive tape 220 opposite to the side 221. The another side 222 may be a side facing a first opening 211 (e.g., facing a -z direction). The release paper 223 may be attached on the another side 222 so as to be peeled off. Since the release paper 223 is attached on the another side 222 so as to be peeled off, a user may peel off the release paper 223 by holding and pulling the release paper 223. When the user peels off the release paper 223, the another side 222 that was covered by the release paper 223 may be exposed. Since the adhesive tape 220 may be double sided tape, the exposed another side 222 may have adhesive property. For example, the guide member 210 may include a stepped portion 213. The adhesive tape may be disposed on the stepped portion 213.

For example, the user may peel off the release paper 223 attached on the another side 222 of the adhesive tape 220 before inserting the portion 161a of the camera deco 161 into the first opening 211 of the guide member 210. As the release paper 223 is peeled off, the another side 222 having adhesive property may be exposed. As illustrated in FIG. 3A, in a state in which the another side 222 is exposed, the user may insert the portion 161a of the camera deco 161 into the first opening 211 by moving the guide member 210 in a direction from above to below the portion 161a of the camera deco 161 (e.g., a -z direction). As the release paper 223 is peeled off, the another side 222 is exposed, and the another side 222 may be attached along at least a portion of an edge of the camera window 162.

The adhesive tape 220 may fix the guide member 210 by attaching the guide member 210 onto the camera window 162. The side 221 of the adhesive tape 220 may be attached to the inner surface of the guide member 210, and the another side 222 of the adhesive tape 220 may be attached to the camera window 162, such that the guide member 210 may be attached to the camera window 162. In case that the guide member 210 is not fixed, as will be described later, when the coupling member 230 is inserted into the second opening 212 of the guide member 210, the coupling member 230 and the camera window 162 may be misaligned. For example, when the coupling member 230 is not substantially aligned with the camera window 162 and is tilted, an external force applied to the coupling member 230 may not be properly transmitted to the camera window 162, thereby requiring a greater external force to separate the camera window 162. As the guide member 210 is fixed by the adhesive tape 220, the coupling member 230 may be substantially aligned with the camera window 162 when inserted into the second opening 212.

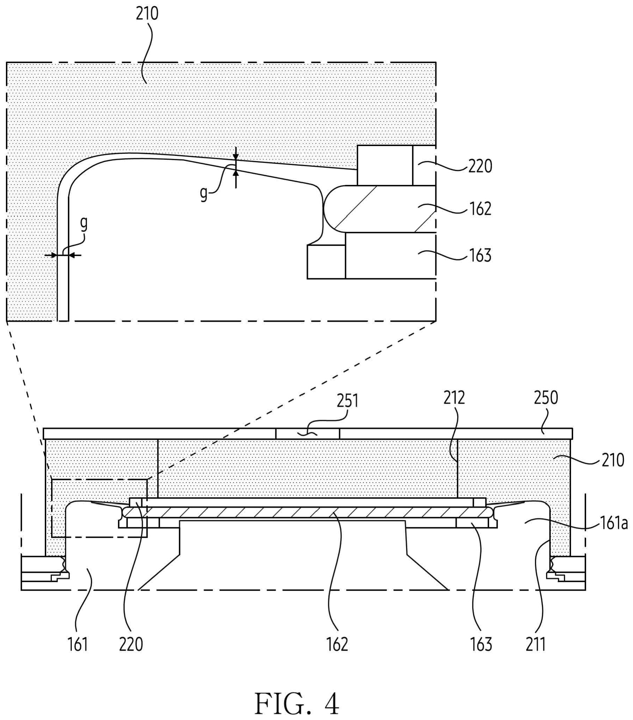

FIG. 4 is a cross-sectional view of a guide member of a separation device cut along line A-A' of FIG. 3B, according to an embodiment.

FIG. 4 illustrates a state in which a guide member 210 is positioned to at least partially surround a portion 161a of a camera deco 161 exposed to an outside of an electronic device 100. Referring to FIG. 4, the guide member 210 may include a stepped portion 213. For example, the stepped portion 213 may be formed according to a difference in size between a first opening 211 and a second opening 212. For example, a size of the second opening 212 may be smaller than a size of the first opening 211. The second opening 212 may be positioned above (e.g., in a -z direction) the first opening 211. The stepped portion 213 may be formed between the first opening 211 and the second opening 212.

For example, an adhesive tape 220 may be attached onto the stepped portion 213. For example, a side 221 of the adhesive tape 220 may be attached to the stepped portion 213. In a state in which the guide member 210 is positioned to at least partially surround the portion 161a of the camera deco 161, the adhesive tape 220 may be interposed between the guide member 210 and the camera window 162. For example, the adhesive tape 220 may be attached along at least a portion of an edge of the camera window 162. For example, the adhesive tape 220 may have a width so as not to be exposed through the second opening 212. When the second opening 212 is viewed from above, the adhesive tape 220 attached onto the stepped portion 213 may be covered by the guide member 210 and may not be visible.

For example, the portion 161a of the camera deco 161 may be inserted into the first opening 211. An outer surface of the portion 161a of the camera deco 161 inserted into the first opening 211 may be at least partially surrounded by the guide member 210. By at least partially surrounding the outer surface of the portion 161a of the camera deco 161, the guide member 210 may reduce inflow of an attachment solution 241 to the portion 161a of the camera deco 161. For example, when the attachment solution 241 injected onto the camera window 162 exceeds a designated injection volume, the attachment solution 241 may overflow as a coupling member 230 is inserted into the second opening 212 and contacts the camera window 162. The attachment solution 241 exceeding an appropriate amount may overflow onto the portion 161a of the camera deco 161. By at least partially surrounding the outer surface of the portion 161a of the camera deco 161, the guide member 210 may reduce overflow of the attachment solution 241 onto the portion 161a of the camera deco 161.

For example, in a state in which the guide member 210 is positioned to at least partially surround the portion 161a of the camera deco 161, a gap g between an inner surface of the guide member 210 and the portion 161a of the camera deco 161 may be limited to a predetermined distance or less. As described above, a size of the first opening 211 may be greater than a size of the portion 161a of the camera deco 161 so that the portion 161a of the camera deco 161 may be inserted into the first opening 211. When a difference between the size of the first opening 211 and the size of the portion 161a of the camera deco 161 is too large, the guide member 210 may not be fixed and may be tilted. When the difference between the size of the first opening 211 and the size of the portion 161a of the camera deco 161 is too small, it may be difficult to insert the portion 161a of the camera deco 161 into the first opening 211. When the portion 161a of the camera deco 161 is tightly inserted into the first opening 211, it may be difficult to separate the guide member 210 from the portion 161a of the camera deco 161.

For example, the gap g between the guide member 210 and the portion 161a of the camera deco 161 may be approximately 0.1 mm. When the portion 161a of the camera deco 161 is inserted into the first opening 211 with a spacing of approximately 0.1 mm, the guide member 210 may be easily fixed, and when separating the camera window 162 from the camera deco 161, the guide member 210 may be easily separated from the portion 161a of the camera deco 161. For example, a gap g between the adhesive tape 220 attached onto the stepped portion 213 and the camera deco 161 may be approximately 0.2 mm. The numerical values described above are merely exemplary and are not limited thereto. The gaps may be referred to as design tolerances of the guide member 210.

After the guide member 210 is attached to the camera window 162 by the adhesive tape 220, the attachment solution 241 may be injected through a third opening 251 of a cover 250 and the second opening 212 of the guide member 210. The attachment solution 241 may be injected by an injection member 240. Hereinafter, with reference to the drawings, a process in which the attachment solution 241 is injected onto the camera window 162 by the injection member 240 will be described.

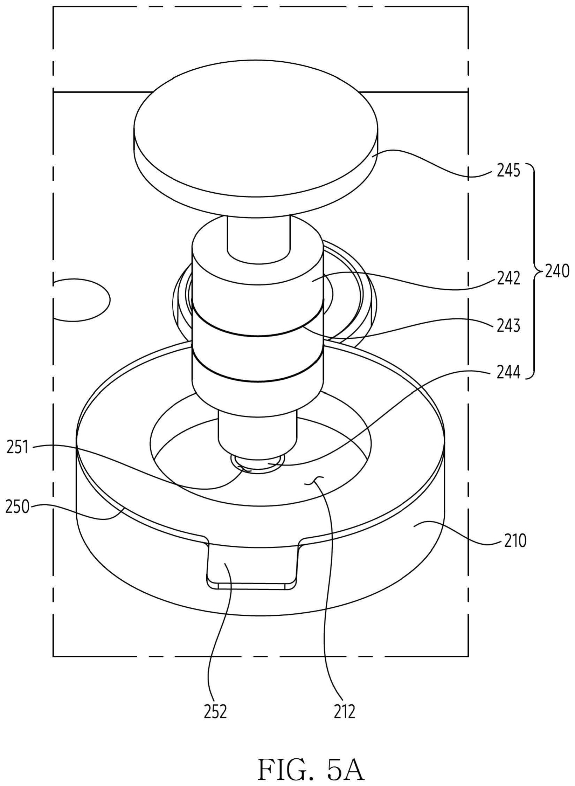

FIG. 5A illustrates a state in which a portion of an injection member of a separation device is inserted into a third opening, according to an embodiment. FIG. 5B illustrates a process in which the injection member of the separation device injects an attachment solution, according to an embodiment.

Referring to FIGS. 5A and 5B, an injection member 240 may receive an attachment solution 241 for attaching a coupling member 230 to a camera window 162. The injection member 240 may inject the attachment solution 241 received therein onto the camera window 162 through a second opening 212. For example, a portion of the injection member 240 may be inserted into a third opening 251 of a cover 250. The attachment solution 241 may be discharged from an inside of the injection member 240 through the portion of the injection member 240 inserted into the third opening 251.

For example, a portion (e.g., a tip 244 of FIG. 5B) of the injection member 240 may be inserted into the third opening 251 of the cover 250 covering the second opening 212. After being inserted into the third opening 251, the injection member 240 may be configured to inject the attachment solution 241 received therein. For example, the attachment solution 241 may be injected by a user. After being discharged through the portion (e.g., the tip 244 of FIG. 5B) of the injection member 240 inserted into the third opening 251, the attachment solution 241 may be provided onto the camera window 162.

Since the attachment solution 241 is discharged through the portion of the injection member 240 inserted into the third opening 251, a position at which the attachment solution 241 is provided onto the camera window 162 may be substantially aligned with the third opening 251. For example, the third opening 251 may be substantially aligned with the camera window 162 so that the attachment solution 241 may be discharged toward a center of the camera window 162.

Referring to FIG. 5B, the injection member 240 may have a syringe shape. For example, the injection member 240 may include a barrel 242, a tip 244, and a plunger 245.

A state 501 of FIG. 5B illustrates a state in which a portion (e.g., the tip 244) of the injection member 240 is inserted into the second opening 212. Referring to the state 501, the barrel 242 may receive the attachment solution 241. The barrel 242 may be substantially transparent so that the attachment solution 241 received therein may be visible. As the barrel 242 is formed to be substantially transparent, a user may visually recognize an amount of the attachment solution 241 received in the barrel 242.

For example, the tip 244 may provide a passage through which the attachment solution 241 received in the barrel 242 is discharged. The attachment solution 241 received in the barrel 242 may be discharged to an outside of the barrel 242 through the tip 244 by being pressed by the plunger 245. For example, a diameter of the tip 244 may be smaller than a diameter of the barrel 242. For example, the diameter of the tip 244 may correspond to a diameter of the third opening 251. As the diameter of the tip 244 corresponds to the diameter of the third opening 251, in a state in which the tip 244 is inserted into the third opening 251, the tip 244 may be fixed without being tilted. For example, the tip 244 may be coupled to a side of the barrel 242. In the state 501 in which the tip 244 is inserted into the third opening 251, the tip 244 may face the camera window 162.

For example, the barrel 242 may include a scale 243 for guiding a designated injection volume of the attachment solution 241 received therein. For example, the scale 243 may be displayed on an outer circumferential surface of the barrel 242 so as to be visible to the user. For example, the attachment solution 241 may be required to be injected by the designated injection volume. The designated injection volume may be referred to as a single injection amount for separating the camera window 162. When the attachment solution 241 is injected in an amount greater than the designated injection volume, an amount of the attachment solution 241 greater than a required amount may be provided onto the camera window 162, such that the attachment solution 241 may overflow between the camera window 162 and a camera deco 161. When the attachment solution 241 is injected in an amount smaller than the designated injection volume, the attachment solution 241 for attaching the coupling member 230 to the camera window 162 may be insufficient, such that the coupling member 230 may not be firmly attached to the camera window 162. The user may check the designated injection volume through the scale 243 displayed on the barrel 242. The user may inject the attachment solution 241 by the designated injection volume guided by the scale 243.

For example, an amount of the attachment solution 241 received in the barrel 242 may be greater than the designated injection volume. For example, the amount of the attachment solution 241 received in the barrel 242 may be a double injection amount (e.g., twice the designated injection volume), but is not limited thereto. When the injection solution received in the barrel 242 is only the designated injection volume, the attachment solution 241 may be insufficient as the user incorrectly discharges the attachment solution 241. Alternatively, an amount of the attachment solution 241 greater than the designated injection volume may be required to separate one or more camera windows 162. For example, as an amount of attachment solution 241 greater than the designated injection volume is received in the injection member 240, the user may cope with a situation in which an additional attachment solution 241 is required. For example, a guide member 210, an adhesive tape 220, and the coupling member 230 may be disposable for use in separating one camera window 162, but the injection member 240 may be used to separate one or more camera windows 162. For example, when a double injection amount of the attachment solution 241 is received in the barrel 242, the scale 243 displayed on the barrel 242 may include two scales 243 to guide the double injection amount. However, it is not limited thereto. For example, an amount of the attachment solution 241 received in the barrel 242 may be a triple or more injection amount.

For example, the plunger 245 may be used to push the attachment solution 241 received in the barrel 242 toward the tip 244. For example, the plunger 245 may be slidably coupled to another side of the barrel 242 opposite to the side. When the plunger 245 is moved relative to the barrel 242 in a direction facing the camera window 162 (e.g., a +z direction), a volume of the barrel 242 may be reduced, thereby injecting the attachment solution 241 received in the barrel 242 onto the camera window 162 through the tip 244. In the state 501, the user may inject the attachment solution 241 by pressing the plunger 245. When the user presses the plunger 245, the user may inject the attachment solution 241 corresponding to the designated injection volume through the scale 243 displayed on the barrel 242.

A state 502 of FIG. 5B illustrates a state in which the attachment solution 241 received in the barrel 242 is injected onto the camera window 162. Referring to the state 502, as the plunger 245 is moved in a direction facing the camera window 162 (e.g., the +z direction), the attachment solution 241 received in the barrel 242 may be injected through the tip 244. Since the tip 244 is facing the camera window 162, the attachment solution 241 discharged from the tip 244 may be provided onto the camera window 162. Since the attachment solution 241 is a solution having adhesive property, it may have relatively high viscosity. Since viscosity of the attachment solution 241 is relatively high, the attachment solution 241 may be positioned within a predetermined area without flowing on the camera window 162. After the attachment solution 241 corresponding to the designated injection volume is injected, the injection member 240 may be removed from the second opening 212.

Referring again to FIG. 5A, the cover 250 may include a protrusion 252. For example, the protrusion 252 may protrude to an outside of the camera deco 161. Since the cover 250 attached onto the guide member 210 covers the second opening 212, the second opening 212 may be shielded by the cover 250. After the attachment solution 241 is injected onto the camera window 162 by the injection member 240, a process of attaching the coupling member 230 to be described later to the camera window 162 may be performed. The coupling member 230 may contact the camera window 162 by being inserted into the second opening 212. To insert the coupling member 230 into the second opening 212, the cover 250 may be removed from the guide member 210. The protrusion 252 may protrude to the outside of the camera deco 161 to facilitate removal of the cover 250. For example, the user may remove the cover 250 attached onto the guide member 210 by holding the protrusion 252 and peeling off the cover 250. As the cover 250 is removed, the second opening 212 that was shielded may be exposed.

After the attachment solution 241 is injected onto the camera window 162, the coupling member 230 may be attached to the camera window 162 through the second opening 212. Hereinafter, with reference to the drawings, a process in which the camera window 162 is separated by the coupling member 230 will be described.

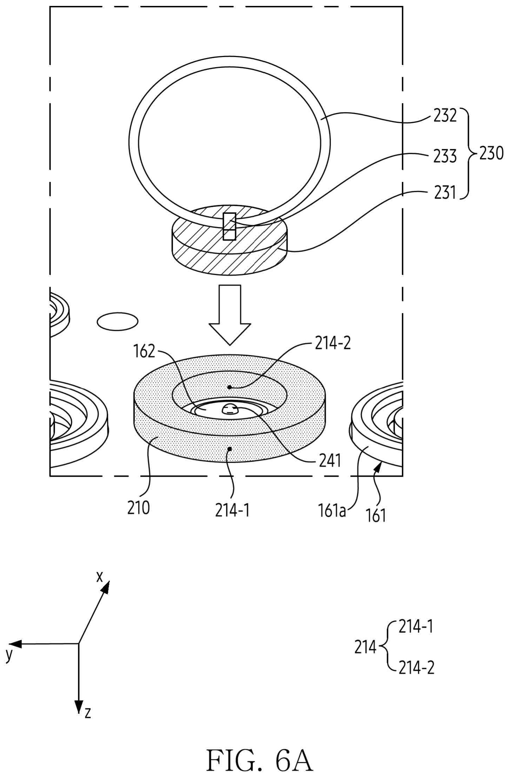

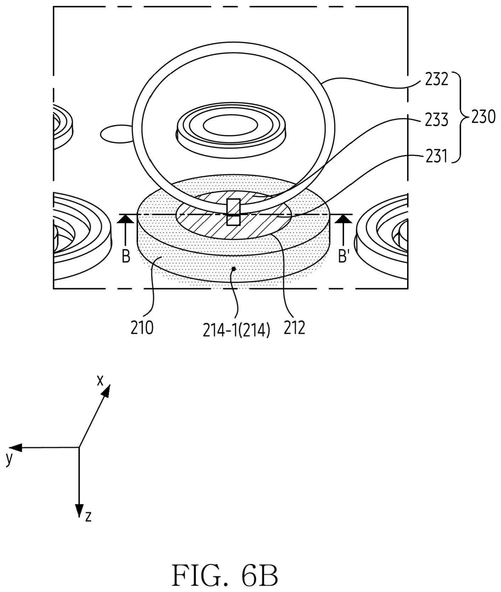

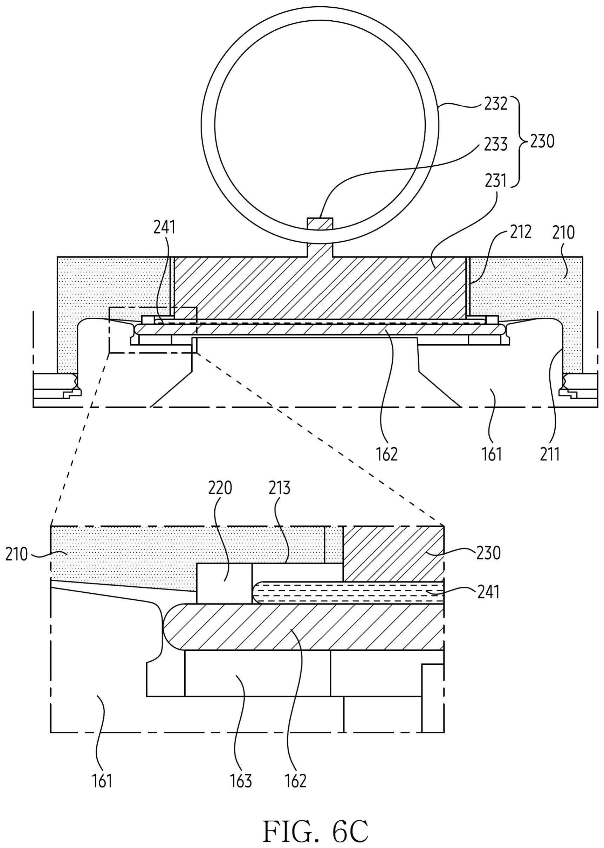

FIG. 6A illustrates a state before a coupling member of a separation device is inserted into a second opening, according to an embodiment. FIG. 6B illustrates a state in which the coupling member of the separation device is inserted into the second opening, according to an embodiment. FIG. 6C is a cross-sectional view of the separation device cut along line B-B' of FIG. 6B, according to an embodiment.

Referring to FIGS. 6A and 6B, a coupling member 230 may be attached to a camera window 162 by being inserted into a second opening 212. For example, since the second opening 212 of a guide member 210 is substantially aligned with the camera window 162, the camera window 162 may be exposed through the second opening 212. The coupling member 230 may be inserted into the second opening 212 and may contact an attachment solution 241 injected onto the camera window 162.

For example, the coupling member 230 may have a shape corresponding to a shape of the second opening 212 to be inserted into the second opening 212. For example, when the second opening 212 has a cylindrical shape, the coupling member 230 may also have a cylindrical shape. For example, a diameter and a height of the coupling member 230 may correspond to a diameter and a height of the second opening 212.

The coupling member 230 may be inserted into the second opening 212. When the coupling member 230 is fully inserted into the second opening 212, the coupling member 230 may contact the camera window 162. As the coupling member 230 contacts the camera window 162, the attachment solution 241 injected onto the camera window 162 may contact the coupling member 230. The coupling member 230 may spread the attachment solution 241 injected onto the camera window 162 along a surface of the camera window 162. Before contacting the coupling member 230, the attachment solution 241 may be positioned within a predetermined area without spreading along the surface of the camera window 162 due to its relatively high viscosity. As the coupling member 230 inserted into the second opening 212 contacts the surface of the camera window 162, the attachment solution 241 may spread between the surface of the camera window 162 and a side of the coupling member 230. When a user inserts the coupling member 230 into the second opening 212 while applying a predetermined external force to the coupling member 230, the attachment solution 241 may spread due to the pressure. As the attachment solution 241 spreads, the attachment solution 241 may spread between the side of the coupling member 230 and the surface of the camera window 162.

For example, the guide member 210 may include at least one through hole 214. For example, the at least one through hole 214 may extend from an outer surface of the guide member 210 to the second opening 212. By the at least one through hole 214, the second opening 212 may be connected to an outside of the guide member 210. For example, in a state in which the coupling member 230 is inserted into the second opening 212, when the user presses the coupling member 230, the attachment solution 241 may spread. When the attachment solution 241 spreads, the attachment solution 241 may spread while pushing air between the coupling member 230 and the camera window 162. When the air is not discharged to an outside of the second opening 212, the air may be compressed, thereby increasing the air pressure. Since the air pressure may act as a resistive force that inhibits spreading of the attachment solution 241, spreading of the attachment solution 241 may be difficult. The air may be discharged through the at least one through hole 214 of the guide member 210. For example, the at least one through hole 214 may provide a path through which the air is discharged from the second opening 212 to the outside of the guide member 210. As the attachment solution 241 spreads and pushes the air, the air may be discharged to the outside of the guide member 210 through the at least one through hole 214. As the air is discharged to the outside of the guide member 210, the resistive force inhibiting spreading of the attachment solution 241 may be reduced, thereby allowing the attachment solution 241 to spread along an entire area between the coupling member 230 and the camera window 162. For example, the at least one through hole 214 may include a first through hole 214-1 and a second through hole 214-2 positioned in opposite directions, but is not limited thereto. For example, the at least one through hole 214 may be one, or may be two or more.

Referring to FIG. 6C, as a coupling member 230 is pressed, an attachment solution 241 may spread along a gap between a camera window 162 and the coupling member 230. For example, an adhesive tape 220 for attaching a guide member 210 to the camera window 162 may seal a space between a first opening 211 and a camera deco 161. When the attachment solution 241 spreads, the adhesive tape 220 may reduce overflow of the attachment solution 241 between the camera deco 161 and the guide member 210. For example, when the attachment solution 241 spreads, the adhesive tape 220 may reduce inflow of the attachment solution 241 into a gap between the first opening 211 and the camera deco 161, thereby reducing bonding of the camera deco 161 and the guide member 210 by the attachment solution 241.

For example, the adhesive tape 220 for a camera 150 may be interposed between the camera deco 161 and the camera window 162. For example, the adhesive tape 220 for the camera 150 may be attached along at least a portion of an edge of the camera window 162. For example, the adhesive tape 220 for the camera 150 may have relatively high adhesive strength to attach the camera window 162 onto the camera deco 161. For example, adhesive strength of the adhesive tape 220 for the camera 150 may be approximately 1,900 gf/in. For example, an area of the adhesive tape 220 for the camera 150 may be approximately 30.3 mm². However, the numerical values described above are merely exemplary and are not limited thereto.

For example, the coupling member 230 may include a body 231 and a knob 232. For example, the body 231 may include a portion inserted into a second opening 212. When the body 231 is fully inserted into the second opening 212, an upper surface (e.g., a surface facing a -z direction) of the second opening 212 may form substantially the same plane as an upper surface of the guide member 210. The body 231, by contacting the camera window 162, may be attached to the camera window 162 by the attachment solution 241.

For example, the knob 232 may be coupled to the body 231. The knob 232 may protrude to an outside of the second opening 212 so that a user may pull the knob 232. For example, the knob 232 may be pivotably coupled to the body 231. For example, the body 231 may include a protrusion 233 to which the knob 232 is coupled. For example, the knob 232 may have a ring shape inserted into the protrusion 233. The user may insert a finger into the ring-shaped knob 232 and provide an external force in a direction (e.g., the -z direction) for separating the camera window 162. Since the knob 232 is pivotable with respect to the body 231, when the user provides the external force, the knob 232 may be moved in a direction that facilitates application of the external force by the user.

When the user holds the knob 232 and provides the external force in the direction (e.g., the -z direction), the camera window 162 may be separated from the camera deco 161 while being attached to the body 231 of the coupling member 230. Hereinafter, with reference to the drawings, a process in which the camera window 162 is separated from the camera deco 161 by an exemplary separation device 200 will be described.

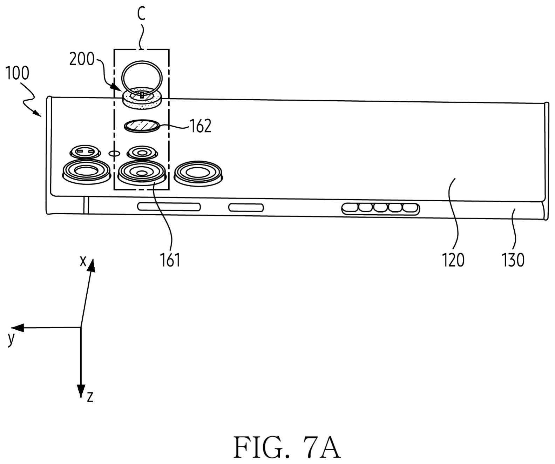

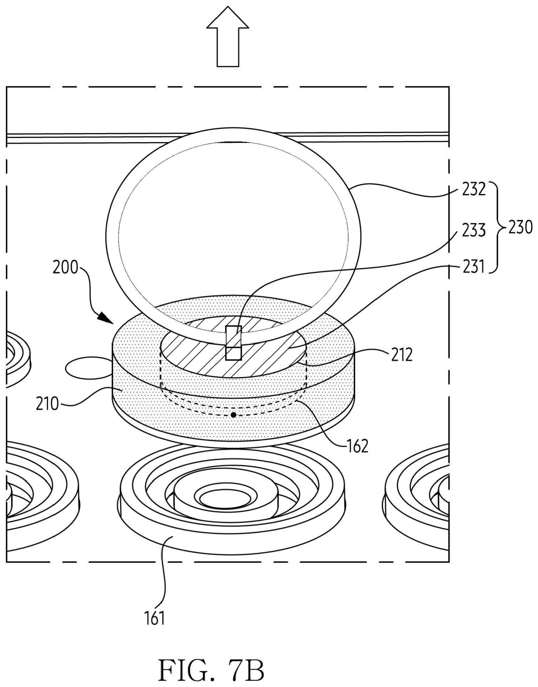

FIG. 7A illustrates a state in which a separation device is disassembled, according to an embodiment. FIG. 7B is an enlarged view of region C of FIG. 7A.

Referring to FIG. 7A, a separation device 200 according to an embodiment may separate a camera window 162 from a camera deco 161 by an external force. For example, when a user applies an external force in a direction (e.g., a -z direction) for separating the camera window 162 from the camera deco 161, the camera window 162 may be separated from the camera deco 161 while being attached to the separation device 200.

For example, when a certain time elapses in a state in which a coupling member 230 is inserted into a second opening 212 and is in contact with the camera window 162, the attachment solution 241 may be cured for a certain time. As the attachment solution 241 is cured, the coupling member 230 may be coupled to the camera window 162. Since the attachment solution 241 is cured in a state of being spread between the coupling member 230 and the camera window 162, a first attachment area between the coupling member 230 and the camera window 162 may be greater than a second attachment area (e.g., approximately 30.3 mm²) between the camera deco 161 and the camera window 162. Since the first attachment area is greater than the second attachment area, when an external force is applied to the coupling member 230, the external force may be provided to the camera window 162 coupled to the coupling member 230. By the external force, the camera window 162 may be separated from the camera deco 161.

Although the camera window 162 illustrated in FIG. 7A is shown as being spaced apart from the separation device 200, this is for convenience of description. When the camera window 162 is separated from the camera deco 161, the camera window 162 may be separated while being attached to the separation device 200.

Referring to FIG. 7B, the camera window 162 may be separated while being coupled to the coupling member 230. Since a guide member 210 is attached to the camera window 162 by an adhesive tape (e.g., the adhesive tape 220 of FIG. 3C), when the camera window 162 is separated from the camera deco 161, the guide member 210 may be separated from the camera deco 161 together with the camera window 162. The separation device 200 according to an embodiment may separate the camera window 162 from the camera deco 161 without separation of a rear plate 120. Since separation of the rear plate 120 is not required, when using the separation device 200 according to an embodiment, the camera window 162 may be separated simply. Since a process of separating the rear plate 120 to separate the camera window 162 is omitted, a separation process may be shortened, and since use of a separate device (e.g., a suction device) is not required, the camera window 162 may be separated simply.

The separation device 200 according to an embodiment may enable self-repairing of an electronic device 100 (e.g., a smartphone) owned by a user. Since the user may separate the camera window 162 themselves, the user may replace the camera window 162 without using a service of a manufacturer of the electronic device 100. Since the user may replace the camera window 162 without separation of the rear plate 120, environmental pollution issues that may occur in a process of separating the rear plate 120 (e.g., use of adhesive material of the rear plate 120) may be resolved. The separation device 200 according to an embodiment may be provided to the user as a set including the guide member 210, the adhesive tape 220, the coupling member 230, and an injection member 240.

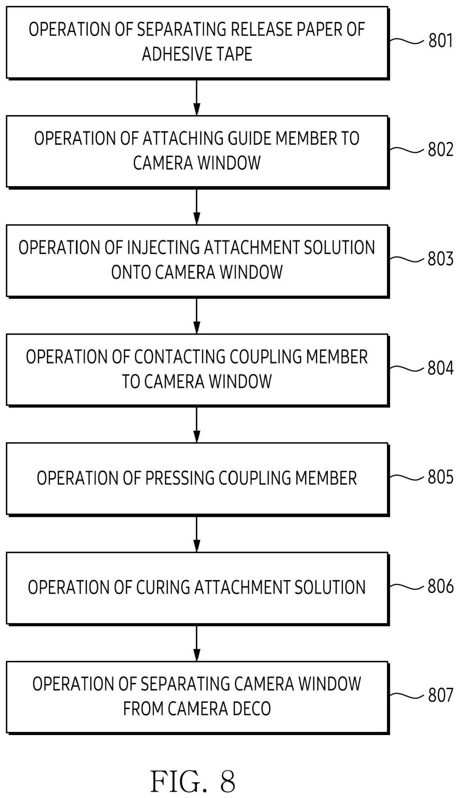

FIG. 8 is a flow chart illustrating a process of separating a camera window using a separation device according to an embodiment.

A process of separating a camera window (e.g., the camera window 162 of FIG. 1B) from a camera deco (e.g., the camera deco 161 of FIG. 1B) using the above-described separation device (e.g., the separation device 200 of FIG. 2) will be described. The separation device 200 according to an embodiment may separate the camera window 162 from the camera deco 161 without a separation process of a rear plate (e.g., the rear plate 120 of FIG. 1B). Operations illustrated in FIG. 8 may be performed by a user using the separation device 200.

Referring to FIG. 8, in operation 801, a release paper (e.g., the release paper 223 of FIG. 3C) of an adhesive tape (e.g., the adhesive tape 220 of FIG. 3C) may be separated.

For example, operation 801 may be an operation of separating the release paper 223 of the adhesive tape 220 for attaching a guide member (e.g., the guide member 210 of FIG. 2) to the camera window 162, before inserting the portion (e.g., the portion 161a of FIG. 1B) of the camera deco 161 into the second opening (e.g., the second opening 212 of FIG. 2) of the guide member 210.

For example, the adhesive tape 220 may include a peelable release paper 223. The adhesive tape 220 may be attached to an inner surface of the guide member 210. For example, a side (e.g., the side 221 of FIG. 3C) of the adhesive tape 220 may be attached onto a stepped portion (e.g., the stepped portion 213 of FIG. 3C) of the guide member 210. The release paper 223 may be attached onto another surface (e.g., the another surface 222 of FIG. 3C) of the adhesive tape 220 so as to be peeled off. To attach the guide member 210 to the camera window 162, the user may remove the release paper 223 and expose the another surface 222.

In operation 802, the guide member 210 may be attached to the camera window 162.

For example, operation 802 may be an operation of attaching the guide member 210 to the camera window 162 by inserting the portion 161a of the camera deco 161 exposed to an outside of an electronic device (e.g., the electronic device 100 of FIG. 1B) into a first opening 211 of the guide member 210.

For example, the user may dispose the guide member 210 to surround the portion 161a of the camera deco 161 exposed to the outside of the electronic device 100. The portion 161a of the camera deco 161 may be inserted into the first opening 211 (e.g., the first opening 211 of FIG. 2) of the guide member 210. When the guide member 210 is disposed to surround the portion 161a of the camera deco 161, the another surface 222 of the adhesive tape 220 may be attached along at least a portion of an edge of the camera window 162. By the adhesive tape 220, the guide member 210 may be attached to the camera window 162.

In operation 803, an attachment solution (e.g., the attachment solution 241 of FIG. 5B) may be injected onto the camera window 162.

For example, operation 803 may be an operation of injecting the attachment solution 241 received in an injection member (e.g., the injection member 240 of FIG. 5B) onto the camera window 162 substantially aligned with the second opening 212 of the guide member 210.

For example, operation 803 may include, in order to inject the attachment solution 241 received in the injection member 240 onto the camera window 162, a first operation of inserting a portion of the injection member 240 into a third opening (e.g., the third opening 251 of FIG. 2) formed in a cover 250 of the guide member 210, and a second operation of injecting the attachment solution 241 received in the injection member 240.

For example, the first operation may be an operation of inserting a tip 244 of the syringe-shaped injection member 240 into the third opening 251 of the cover 250. The user may insert the tip 244 into the third opening 251. For example, the second operation may be an operation of injecting the attachment solution 241 received in a barrel (e.g., the barrel 242 of FIG. 5A) through a tip (e.g., the tip 244 of FIG. 5A) using a plunger (e.g., the plunger 245 of FIG. 5A) of the injection member 240. The attachment solution 241 injected through the tip 244 may be injected onto the camera window 162 substantially aligned with the third opening 251. The user may check a designated injection volume through a scale (e.g., the scale 243 of FIG. 5A) displayed on the barrel 242. For example, an amount of the attachment solution 241 received in the barrel 242 may be twice the designated injection volume. For example, the barrel 242 may include two scales indicating an injection volume corresponding to two injections. The user may inject the attachment solution 241 by the designated injection volume by visually recognizing an amount of the attachment solution 241 remaining in the barrel 242 through the scale 243.

In operation 804, the coupling member 230 may be contacted with the camera window 162.

For example, operation 804 may be an operation of contacting a coupling member (e.g., the coupling member 230 of FIG. 2) to the camera window 162 by inserting the coupling member 230 into the second opening 212.

For example, after injecting the attachment solution, the user may separate the injection member 240 from the third opening 251 and then remove the cover 250. As the cover 250 is removed, the second opening 212 may be exposed to the outside. The user may insert the coupling member 230 into the exposed second opening 212. The coupling member 230 may be contacted with the camera window 162 by being inserted into the second opening 212.

In operation 805, the coupling member 230 may be pressed.

For example, operation 805 may be an operation of pressing the coupling member 230 to spread the attachment solution 241, after contacting the coupling member 230 with the camera window 162.

For example, since the attachment solution 241 is a solution having adhesive property, it may have relatively high viscosity. Since viscosity of the attachment solution 241 is relatively high, the attachment solution 241 may be positioned within a predetermined area without flowing on the camera window 162. The coupling member 230 may spread the attachment solution 241 injected onto the camera window 162 along a surface of the camera window 162. When a user inserts the coupling member 230 into the second opening 212 while applying a predetermined external force to the coupling member 230, the attachment solution 241 may spread due to the pressure. As the attachment solution 241 spreads, the attachment solution 241 may spread between a side of the coupling member 230 and the surface of the camera window 162. As the attachment solution 241 spreads, a bonding area between the coupling member 230 and the camera window 162 may increase.

In operation 806, the attachment solution 241 may be cured.

For example, operation 806 may be an operation of curing the attachment solution 241 contacting the camera window 162 and the coupling member 230 for a certain time after inserting the coupling member 230 into the second opening 212. Through the curing process, as the attachment solution 241 is cured, the camera window 162 and the coupling member 230 may be coupled to each other.

For example, when a certain time elapses in a state in which the coupling member 230 is inserted into the second opening 212 and is in contact with the camera window 162, the attachment solution 241 may be cured for a certain time. As the attachment solution 241 is cured after being spread between the coupling member 230 and the camera window 162, the coupling member 230 may be coupled to the camera window 162. Since the attachment solution 241 is cured in a state of being spread between the coupling member 230 and the camera window 162, a first attachment area between the coupling member 230 and the camera window 162 may be greater than a second attachment area (e.g., approximately 30.3 mm²) between the camera deco 161 and the camera window 162.

In operation 807, the camera window 162 may be separated from the camera deco 161.

For example, operation 807 may be an operation of separating the camera window 162 from the camera deco 161 by applying an external force to the coupling member 230.

For example, the user may separate the camera window 162 from the camera deco 161 by applying an external force to the coupling member 230 in a direction for separating the camera window 162. Since the guide member 210 is attached to the camera window 162 by the adhesive tape 220, when the camera window 162 is separated from the camera deco 161, the guide member 210 may be separated from the camera deco 161 together with the camera window 162. The separation device 200 according to an embodiment may separate the camera window 162 from the camera deco 161 without separation of the rear plate 120.

A separation device 200 is provided. The separation device 200 may comprise a guide member 210 including a first opening 211 for at least partially surrounding a portion 161a of a camera deco 161 exposed to an outside of an electronic device 100, and a second opening 212 substantially aligned with a camera window 162 attached onto the camera deco 161. The separation device 200 may comprise an adhesive tape 220 for attaching the guide member 210 to the camera window 162. The separation device 200 may comprise a coupling member 230 having a shape corresponding to a shape of the second opening 212 to be inserted into the second opening 212, and attached to the camera window 162 by being inserted into the second opening 212. The separation device 200 may comprise an injection member 240 for receiving an attachment solution 241 for attaching the coupling member 230 to the camera window 162, and for injecting the attachment solution 241 onto the camera window 162.

For example, a shape of the first opening 211 may substantially correspond to a shape of the portion 161a of the camera deco 161.

For example, the guide member 210 may include at least one through hole 214 extending from an outer surface of the guide member 210 to the second opening 212. The at least one through hole 214 may be configured to provide a path through which air is discharged from the second opening 212 to the outside of the guide member 210 when the air between the coupling member 230 and the camera window 162 is compressed by inserting the coupling member 230 into the second opening 212, in a state in which the guide member 210 is positioned to at least partially surround the portion 161a of the camera deco 161.

For example, the guide member 210 may include a cover 250 for covering the second opening 212. The cover 250 may include a third opening 251 substantially aligned with the camera window 162.

For example, the cover 250 may be substantially transparent.

For example, the adhesive tape 220 may be interposed between the guide member 210 and the camera window 162 in a state in which the guide member 210 is positioned to at least partially surround the camera deco 161.

For example, a size of the second opening 212 may be smaller than a size of the first opening 211. The guide member 210 may include a stepped portion 213 formed between the first opening 211 and the second opening 212. The adhesive tape 220 may be attached onto the stepped portion 213.

For example, the adhesive tape 220 may seal a space between the first opening 211 and the camera deco 161.

For example, a side 221 of the adhesive tape 220 may be attached to the stepped portion 213. The adhesive tape 220 may include a peelable release paper 223 attached to another side 222 of the adhesive tape 220 opposite to the side 221.

For example, the coupling member 230 may include a body 231 for being attached to the camera window 162 by being inserted into the second opening 212. The coupling member 230 may include a knob 232 coupled to the body 231 and protruding to an outside of the second opening 212.

For example, the knob 232 may be pivotably coupled to the body 231.

For example, the injection member 240 may include a barrel 242 receiving the attachment solution 241. The injection member 240 may include a tip 244 coupled to a side of the barrel 242 and to be inserted into the third opening 251. The injection member 240 may include a plunger 245 for pushing the attachment solution 241 received in the barrel 242 toward the tip 244.

For example, the barrel 242 may include a scale 243 for guiding a designated injection volume of the attachment solution 241 received in the barrel 242.

For example, an amount of the attachment solution 241 received in the barrel 242 may be greater than the designated injection volume.

For example, the separation device 200 may be configured to separate the camera window 162 from the camera deco 161 by an external force applied to the coupling member 230 in a state in which the guide member 210 is positioned to at least partially surround the portion 161a of the camera deco 161 and the coupling member 230 inserted into the second opening 212 is attached to the camera window 162 by the attachment solution 241.

A method of separating a camera window 162 using a separation device 200 is provided. The method may comprise attaching a guide member 210 to the camera window 162 by inserting a portion 161a of a camera deco 161 exposed to an outside of an electronic device 100 into a first opening 211 of the guide member 210. The method may comprise injecting an attachment solution 241 received in an injection member 240 onto the camera window 162 substantially aligned with a second opening 212 of the guide member 210. The method may comprise contacting the coupling member 230 with the camera window 162 by inserting the coupling member 230 into the second opening 212. The method may comprise separating the camera window 162 from the camera deco 161 by providing an external force to the coupling member 230.

For example, the method may further comprise curing the attachment solution 241 in contact with the camera window 162 and the coupling member 230 after inserting the coupling member 230 into the second opening 212.

For example, the injecting the attachment solution 241 onto the camera window 162 may include inserting a portion of the injection member 240 into a third opening 251 formed in a cover 250 of the guide member 210 to inject the attachment solution 241 received in the injection member 240 onto the camera window 162. The injecting the attachment solution 241 onto the camera window 162 may include injecting the attachment solution 241 received in the injection member 240.

For example, the method may further comprise separating a release paper 223 of an adhesive tape 220 for attaching the guide member 210 to the camera window 162, before inserting the portion 161a of the camera deco 161 into the second opening 212 of the guide member 210.

For example, the method may further comprise pressing the coupling member 230 to spread the attachment solution 241, after contacting the coupling member 230 with the camera window 162.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device 100). For example, a processor of the machine (e.g., the electronic device 100) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A separation device comprising:
a guide member including:
a first opening for at least partially surrounding a portion of a camera deco exposed to an outside of an electronic device, and
a second opening substantially aligned with a camera window attached to the camera deco;
an adhesive tape for attaching the guide member to the camera window;
a coupling member having a shape corresponding to a shape of the second opening for insertion into the second opening, and attached to the camera window by being inserted into the second opening; and
an injection member for receiving an attachment solution for attaching the coupling member to the camera window, and for injecting the attachment solution onto the camera window.

2. The separation device of claim 1,
wherein a shape of the first opening substantially corresponds to a shape of the portion of the camera deco.

3. The separation device of any one of claims 1 or 2,
wherein the guide member includes at least one through hole extending from an outer surface of the guide member to the second opening, and
wherein the at least one through hole is configured to provide a path through which air is discharged from the second opening to the outside of the guide member when the air between the coupling member and the camera window is compressed by inserting the coupling member into the second opening, in a state in which the guide member is positioned to at least partially surround the portion of the camera deco.

4. The separation device of any one of claims 1 to 3,
wherein the guide member includes a cover for covering the second opening, and
wherein the cover includes a third opening substantially aligned with the camera window.

5. The separation device of claim 4,
wherein the cover is substantially transparent.

6. The separation device of any one of claims 1 to 5,
wherein the adhesive tape is interposed between the guide member and the camera window in a state in which the guide member is positioned to at least partially surround the camera deco.

7. The separation device of claim 6,
wherein a size of the second opening is smaller than a size of the first opening,
wherein the guide member includes a stepped portion formed between the first opening and the second opening, and
wherein the adhesive tape is attached onto the stepped portion.

8. The separation device of claim 7,
wherein the adhesive tape is configured to seal between the first opening and the camera deco.

9. The separation device of any one of claims 7 or 8,
wherein a side of the adhesive tape is attached to the stepped portion, and
wherein the adhesive tape includes a peelable release paper attached to another side of the adhesive tape opposite to the side of the adhesive tape.

10. The separation device of any one of claims 1 to 9,
wherein the coupling member includes:
a body for being attached to the camera window by being inserted into the second opening, and
a knob coupled to the body and protruding to an outside of the second opening.

11. The separation device of claim 10,
wherein the knob is pivotably coupled to the body.

12. The separation device of any one of claims 1 to 11,
wherein the injection member includes:
a barrel receiving the attachment solution,
a tip coupled to a side of the barrel and to be inserted into the third opening, and
a plunger for pushing the attachment solution received in the barrel toward the tip.

13. The separation device of claim 12,
wherein the barrel includes a scale for guiding a designated injection volume of the attachment solution received in the barrel.

14. The separation device of any one of claims 12 or 13,
wherein an amount of the attachment solution received in the barrel is greater than the designated injection volume.

15. The separation device of any one of claims 1 to 14,
wherein the separation device is configured to separate the camera window from the camera deco by an external force applied to the coupling member in a state in which the guide member is positioned to at least partially surround the portion of the camera deco and the coupling member inserted into the second opening is attached to the camera window by the attachment solution.
